# EUROPEAN PATENT APPLICATION

(11) **EP 4 512 789 A1**
(43) Date of publication of application: **26.02.2025**
(21) Application number: 24195717.4
(22) Date of filing: 21.08.2024
(51) Int. Cl.: C04B 35/571, C04B 35/573, C04B 35/626, C04B 35/628, C04B 35/634, C04B 35/80

(54) **POLYMER TOWPREG FOR CERAMIC MATRIX COMPOSITES**

(30) Priority: 21.08.2023 US 202318236267
(71) Applicant: RTX Corporation, Farmington, CT 06032 (US)
(72) Inventor: RIEHL, John D., Hebron (US); GARG, Nitin, Avon (US); SUDRE, Olivier H., Glastonbury (US); KONOPASKE, Zachary Paul, West Hartford (US); LENZ, Brendan, North Branford (US); PARIKH, Nil, Newington (US)
(74) Representative: Dehns

(57) **Abstract**

A method of fabricating a fibrous ceramic preform includes impregnating a plurality of individual ceramic tows (26) with a first polymer binder, incorporating the plurality of impregnated ceramic tows (26_{I}) into a ceramic fabric (32), applying a solution comprising a second polymer binder and a second solvent to the ceramic fabric (32), and incorporating the ceramic fabric (32) into the preform. The first polymer binder is insoluble in the second solvent.

## Description

### BACKGROUND

The present invention relates to ceramic matrix composites and, more particularly, to the manufacturing of fibrous ceramic preforms for use in ceramic matrix composites.

Ceramic matrix composites rely on interface coatings for toughness and durability. Interface coatings create an interfacial layer between the fiber and matrix, allowing for ductile behavior and strain under an applied load. Interface coatings also protect the fibers from oxidation in the extreme environment in which they operate. Ceramic tows can be tightly packed with hundreds of filaments, with neighboring filaments often touching. This can create undesirable conditions for the application of interface coatings (e.g., bridging) and densification with matrix. Accordingly, means for increasing filament-to-filament spacing are desirable.

### SUMMARY

A method of fabricating a fibrous ceramic preform includes impregnating a plurality of individual ceramic tows with a first polymer binder, incorporating the plurality of impregnated ceramic tows into a ceramic fabric, applying a solution comprising a second polymer binder and a second solvent to the ceramic fabric, and incorporating the ceramic fabric into the preform. The first polymer binder is insoluble in the second solvent.

A method of fabricating a CMC component includes impregnating a plurality of individual ceramic tows with a first polymer binder, incorporating the plurality of impregnated ceramic tows into a ceramic fabric, applying a solution comprising a second polymer binder and a second solvent to the ceramic fabric, incorporating the ceramic fabric into the preform, decomposing the first polymer binder and the second polymer binder, depositing an interface coating on the preform, and densifying the preform with a ceramic matrix. The first polymer binder is insoluble in the second solvent.

### BRIEF DESCRIPTION OF THE DRAWINGS

FIG. 1 is a flow chart illustrating steps of a method for preparing a CMC component from impregnated tows.
FIGS. 2 and 3 are simplified cross-sectional illustrations of a ceramic tow in a first, unimpregnated state, and a second, impregnated state, respectively.
FIG. 4 is a simplified illustration of a ceramic fabric incorporating impregnated tows, such as is shown in FIG. 3.

While the above-identified figures set forth one or more embodiments of the present disclosure, other embodiments are also contemplated, as noted in the discussion. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale, and applications and embodiments of the present invention may include features and components not specifically shown in the drawings.

### DETAILED DESCRIPTION

This disclosure presents means for increasing the spacing between filaments of a ceramic tow. More specifically, tows can be impregnated with a polymer binder to increase inter-filament spacing which facilitate the application of the interface coating (IFC) on the filaments, allowing more even coverage of filaments with the IFC and improved infiltration of matrix into the tows.

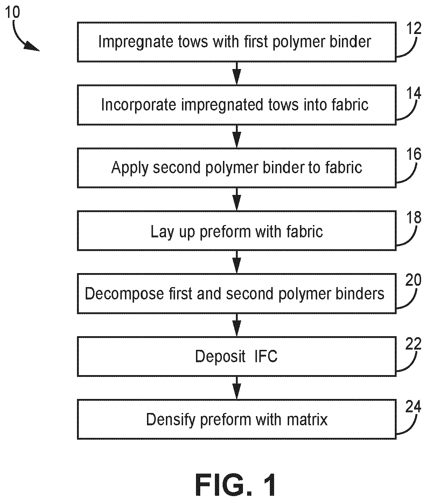

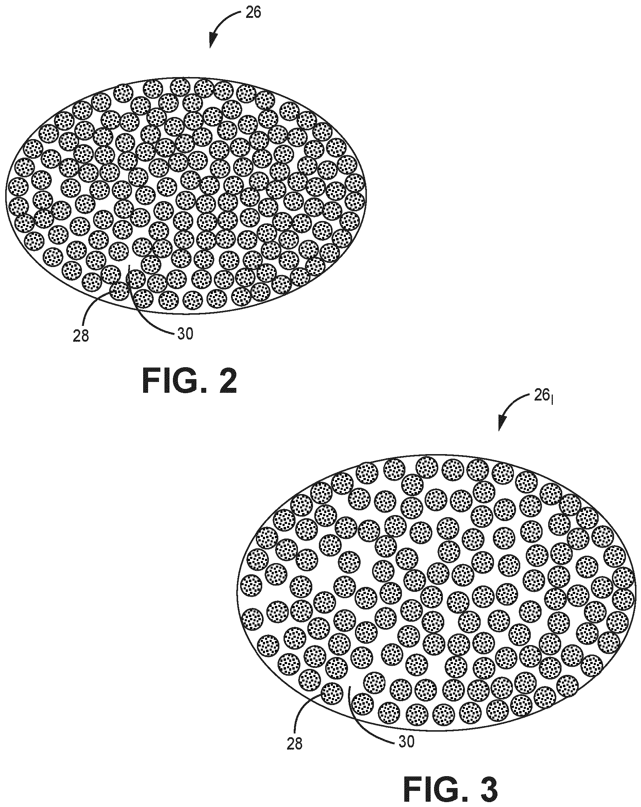

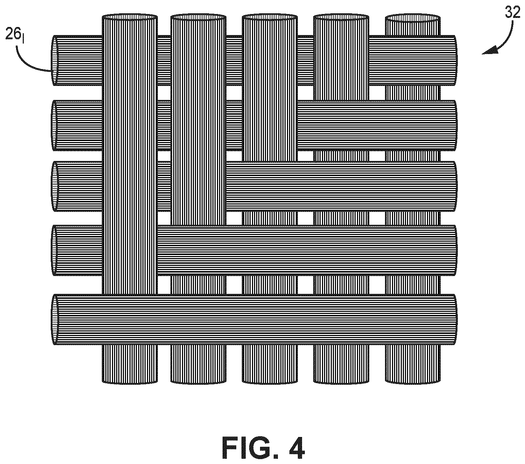

FIG. 1 is a flowchart illustrating steps 12-24 of method 10, used to fabricate a CMC component from impregnated tows. FIGS. 2 and 3 are simplified cross-sectional illustrations of ceramic tow 26 in a first, unimpregnated state, and a second, impregnated state, respectively. FIG. 4 is a simplified illustration of a ceramic fabric incorporating impregnated tows. Method 10 is described below in combination with FIGS. 2-4.

Tow 26 can be a bundle of roughly 500 to 1,000 silicon carbide filaments 28 with inter-filament gaps, or pores 30 surrounding filaments 28. It can be desirable to increase the volume of pores 30 within tows 26 to facilitate more even IFC deposition and matrix infiltration within a ceramic preform containing tows 26. At step 12, tow 26 can be impregnated with a first polymer binder, such as polyvinyl alcohol (PVA). In an exemplary embodiment, an impregnated tow (e.g., tow 26_{I} of FIG. 3) can include 2 wt% to 20 wt% PVA, and in some cases, 5 wt% to 10 wt% PVA. It should be noted that the first polymer binder is distinct from any sizing on tow 26, which can also be PVA. It should further be noted that the first polymer binder is intended to be sacrificial, such that it is decomposed during processing of the preform, as is discussed in greater detail below. This differs from other types of impregnated tows (i.e., towpreg) in which the impregnated resin is cured into the final product. In an alternative embodiment, the first polymer binder can instead be polyvinyl butyral (PVB), similarly present at 2 wt% to 20 wt%, or 5 wt% to 10 wt%.

Step 12 can include drawing a tow (e.g., tow 26) in a spool-to-spool manner across a series of rollers under tension through a bath containing the first polymer binder in solution. For PVA, an exemplary solvent can be water, while for PVB, and exemplary solvent can be an alcohol (e.g., ethanol). Pressure can be applied to the wetted tow to force the first polymer binder into the tow (i.e., into pores 30), by for example, passing the tow through an orifice or some other source of mechanical pressure. Other means for facilitating infiltration of the tow and increased inter-filament spacing, such as ultrasonication in the bath, can additionally and/or alternatively can be used. The tow can subsequently be stabilized for further processing by drying the tow to remove at least a substantial amount of the solvent, while the first polymer binder (e.g., PVA) remains within the tow.

In an alternative embodiment, the first polymer binder, whether PVA or PVB, can be introduced as a slurry of the first polymer binder (e.g., PVA), a solvent (e.g., water), and particles ranging from 1 micron to 20 microns in diameter. These particles can be inorganic (e.g., silicon carbide, boron carbide, hafnium oxide, hafnium boride, aluminum oxide, ytterbium oxide, or zirconium boride), or organic (e.g., PVA or PVB). Inorganic particles can remain as part of the structure through matrix formation and help enhance matrix formation and fortify the resultant CMC component, while organic particles are sacrificial in nature and can further facilitate inter-filament spacing through processing. Solutions/slurries of the first polymer binder can additionally include additives (e.g., plasticizers, wetting agents, etc.) as necessary to modify properties of the solution/slurry and/or resulting polymer, although the first polymer binder (i.e., PVA or PVB) can remain the predominant solute.

At step 14, stabilized, impregnated tows can be incorporated into a ceramic fabric (e.g., fabric 32 of FIG. 4). As shown in FIG. 3, tow 26_{I} can exhibit greater inter-filament spacing due to the incorporation of the first polymer binder into pores 30. More specifically, the average surface-to-surface distance between filaments can increase by 25% in impregnated tows. Further, the percentage of filaments without a neighboring/adjacent filament within 1 micron can be about 25%. Impregnated tows can be woven or braided into a ceramic fabric, or in some cases, arranged into unidirectional tapes. Such fabrics or tapes can include only impregnated tows or can include a mixture of impregnated and standard (i.e., non-impregnated) tows.

At step 16, a solution containing a second polymer binder can be applied to the ceramic fabric to help facilitate the preforming process described below in step 16. In this regard, the second polymer binder acts as a tackifier. The second polymer binder is preferably used with a solvent that does not solubilize the first polymer binder. For example, if the first polymer binder is PVA, then the second polymer binder solution can be PVB in ethanol. Since PVA is not readily soluble in ethanol, the enhanced filament-to-filament spacing engineered into the impregnated tow can be maintained through debulking and preforming processes. The converse is also true, as PVB is not readily soluble in water, which is the preferred solvent for a solution of PVA. As such, using different polymer binders with different solubility characteristics helps assure that the impregnating polymer binder (e.g., PVA) will maintain the enhanced inter-filament spacing of the impregnated tow when exposed to the solvent of the second polymer (e.g., ethanol). The second polymer binder solution can be applied to the ceramic fabric via spraying, dipping, pipetting etc. The ceramic fabric can alternatively be impregnated with the second polymer binder (i.e., to form a prepreg). The ceramic fabric can subsequently be dried to remove the solvent and leave behind the second polymer binder.

At step 18, sheets, plies, etc., derived from the ceramic fabric can be laid up into a preform. In some embodiments, the second polymer binder can be applied to the preform, including amounts supplementing an initial application during step 16. Debulking of the preform can also be carried out as necessary after during and/or after layup. The presence of the impregnating (i.e., first) polymer binder helps maintain the increased inter-filament spacing within the impregnated tows through step 18. Debulking is preferably carried out at temperatures at or below 350°F (176.7°C) to minimize softening and/or migration of the first polymer binder.

At step 20, the first and second polymers can be decomposed. In an exemplary embodiment, the first and second polymer binders can be thermally decomposed by placing the preform in an environment containing air or an inert gas (e.g., nitrogen), or in a vacuum, and exposing the preform to elevated temperatures, for example, up to 2000°F (1093.3°C). Decomposition can be carried out *in situ* (i.e., within the reactor used in step 22), or *ex situ.* Substantially all of the first and second polymer binders are decomposed at step 20, although some polymer ash may remain. If impregnated with a particle slurry, organic particles are also decomposed, while inorganic particles remain in the preform.

At step 22, the preform can undergo IFC deposition using chemical vapor infiltration (CVI). The IFC can include multiple individual layers of materials like boron nitride, silicon-doped boron nitride, silicon carbide, and/or silicon nitride. The increased inter-filament spacing achieved through tow impregnation and subsequent stabilization allows the IFC to coat individual filaments (e.g., filaments 28) more uniformly. This imparts greater performance of the IFC in an operating environment, including an enhanced degree of debonding and crack deflection under oxidizing conditions.

At step 24, the preform can be densified with a matrix using CVI to form a CMC component. During densification, the rigidized preform is infiltrated by reactant vapors, and a gaseous precursor deposits on the ceramic tows. The matrix material can be silicon carbide or other suitable ceramic material. Densification is carried out until the resulting CMC has reached the desired residual porosity. In an alternative embodiment, densification can additionally and/or alternatively include other methodologies such as, but not limited to, melt infiltration (MI) and polymer infiltration and pyrolysis (PIP).

The disclosed impregnated tows can be used to form features in CMC components for use in aerospace, maritime, or industrial equipment, to name a few, non-limiting examples.

### Discussion of Possible Embodiments

The following are non-exclusive descriptions of possible embodiments of the present invention.

A method of fabricating a fibrous ceramic preform includes impregnating a plurality of individual ceramic tows with a first polymer binder, incorporating the plurality of impregnated ceramic tows into a ceramic fabric, applying a solution comprising a second polymer binder and a second solvent to the ceramic fabric, and incorporating the ceramic fabric into the preform. The first polymer binder is insoluble in the second solvent.

The method of the preceding paragraph can optionally include, additionally and/or alternatively, any one or more of the following features, configurations and/or additional steps:
In the above method, the first polymer binder can be polyvinyl alcohol.

In any of the above methods, an amount of polyvinyl alcohol in each of the plurality of impregnated tows can range from 2 wt% to 20 wt%.

In any of the above methods, the second polymer can be polyvinyl butyral, and the second solvent can be ethanol.

In any of the above methods, the step of applying the solution comprising the second polymer binder and the second solvent to the ceramic fabric can include one of spraying, pipetting, dipping, and prepregging.

In any of the above methods, the step of impregnating the plurality of individual ceramic tows can further include drawing each of the plurality of ceramic tows through a bath containing the first polymer binder and a first solvent, subsequently, forcing the first polymer binder into each of the plurality of ceramic tows, and subsequently, drying each of the plurality of ceramic tows.

In any of the above methods, the first solvent can be water.

In any of the above methods, the bath can further include a plurality of particles, each ranging from 1 micron to 20 microns in diameter.

In any of the above methods, the particles can be one of an inorganic and organic material.

In any of the above methods, the step of incorporating the plurality of impregnated ceramic tows into a ceramic fabric can include at least one of weaving and braiding.

A method of fabricating a CMC component can include debulking any of the above preforms, decomposing the first polymer binder and the second polymer binder, depositing an interface coating on the preform, and subsequently, densifying the preform with a ceramic matrix.

In any of the above methods, the step of debulking the preform can include heating the preform to a temperature at or below 350°F (176.7°C).

In any of the above methods, the step of decomposing the first polymer binder and the second polymer binder can include heating the preform in the presence of air or an inert gas.

In any of the above methods, the step of depositing the interface coating can include depositing at least one of boron nitride, silicon-doped boron nitride, silicon carbide, and silicon nitride.

In any of the above methods, the step of depositing the interface coating can be carried out using chemical vapor infiltration.

In any of the above methods, the step of densifying the preform with a ceramic matrix can be carried out using at least one of chemical vapor infiltration, melt infiltration, and polymer infiltration and pyrolysis.

In any of the above methods, the matrix can include silicon carbide.

In any of the above methods, each of the plurality of ceramic tows can include 500 to 1,000 filaments of silicon carbide.

A method of fabricating a CMC component includes impregnating a plurality of individual ceramic tows with a first polymer binder, incorporating the plurality of impregnated ceramic tows into a ceramic fabric, applying a solution comprising a second polymer binder and a second solvent to the ceramic fabric, incorporating the ceramic fabric into the preform, decomposing the first polymer binder and the second polymer binder, depositing an interface coating on the preform, and densifying the preform with a ceramic matrix. The first polymer binder is insoluble in the second solvent.

The method of the preceding paragraph can optionally include, additionally and/or alternatively, any one or more of the following features, configurations and/or additional steps:
In the above method, the first polymer binder can be polyvinyl alcohol.

In any of the above methods, the second polymer can be polyvinyl butyral, and the second solvent can be ethanol.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of fabricating a fibrous ceramic preform, the method comprising:
impregnating a plurality of individual ceramic tows (26) with a first polymer binder;
incorporating the plurality of impregnated ceramic tows (26i) into a ceramic fabric (32);
applying a solution comprising a second polymer binder and a second solvent to the ceramic fabric (32); and
incorporating the ceramic fabric (32) into the preform,
wherein the first polymer binder is insoluble in the second solvent.

2. The method of claim 1, wherein the first polymer binder is polyvinyl alcohol.

3. The method of claim 2, wherein an amount of polyvinyl alcohol in each of the plurality of impregnated tows (26_{I}) ranges from 2 wt% to 20 wt%.

4. The method of claim 1, 2 or 3, wherein the second polymer binder is polyvinyl butyral, and wherein the second solvent is ethanol.

5. The method of any preceding claim, wherein the step of applying the solution comprising the second polymer binder and the second solvent to the ceramic fabric (32) comprises one of spraying, pipetting, dipping, and prepregging.

6. The method of any preceding claim, wherein the step of impregnating the plurality of individual ceramic tows (26) comprises:
drawing each of the plurality of ceramic tows (26) through a bath containing the first polymer binder and a first solvent;
subsequently, forcing the first polymer binder into each of the plurality of ceramic tows (26); and
subsequently, drying each of the plurality of ceramic tows (26),
wherein, optionally, the first solvent is water.

7. The method of claim 6, wherein the bath further comprises a plurality of particles, each ranging from 1 micron to 20 microns in diameter,
wherein, optionally, the particles are one of an inorganic and organic material.

8. The method of any preceding claim, wherein the step of incorporating the plurality of impregnated ceramic tows (26_{I}) into a ceramic fabric (32) comprises at least one of weaving and braiding.

9. A method of fabricating a CMC component comprising:
debulking the preform of any preceding claim;
decomposing the first polymer binder and the second polymer binder;
depositing an interface coating on the preform; and
subsequently, densifying the preform with a ceramic matrix.

10. The method of claim 9, wherein the step of debulking the preform comprises heating the preform to a temperature at or below 350°F (176.7°C).

11. The method of claim 9 or 10, wherein the step of decomposing the first polymer binder and the second polymer binder comprises heating the preform in the presence of air or an inert gas.

12. The method of claim 9, 10 or 11, wherein the step of depositing the interface coating comprises depositing at least one of boron nitride, silicon-doped boron nitride, silicon carbide, and silicon nitride, and, optionally, the step of depositing the interface coating is carried out using chemical vapor infiltration.

13. The method of any of claims 9 to 12, wherein the step of densifying the preform with a ceramic matrix is carried out using at least one of chemical vapor infiltration, melt infiltration, and polymer infiltration and pyrolysis.

14. The method of any of claims 9 to 13, wherein:
the matrix comprises silicon carbide; and/or
each of the plurality of ceramic tows (26) comprises 500 to 1,000 filaments (28) of silicon carbide.

15. A method of fabricating a CMC component, the method comprising:
impregnating a plurality of individual ceramic tows (26) with a first polymer binder to form a plurality of impregnated ceramic tows (26_{I});
incorporating the plurality of impregnated ceramic tows (26_{I}) into a ceramic fabric (32);
applying a solution comprising a second polymer binder and a second solvent to the ceramic fabric (32);
incorporating the ceramic fabric (32) into a preform;
decomposing the first polymer binder and the second polymer binder;
depositing an interface coating on the preform; and
densifying the preform with a ceramic matrix,
wherein the first polymer binder is insoluble in the second solvent,
wherein, optionally:
the first polymer binder is polyvinyl alcohol; and/or
the second polymer is polyvinyl butyral, and wherein the second solvent is ethanol.
